# EUROPÄISCHE PATENTSCHRIFT

(11) **EP 2 782 742 B1**
(45) Veröffentlichungstag und Bekanntmachung des Hinweises auf die Patenterteilung: **24.05.2017**
(21) Anmeldenummer: 12806339.3
(22) Anmeldetag: 23.11.2012
(51) Int. Cl.: B29C 67/00

(54) **VORRICHTUNG ZUR HERSTELLUNG EINES DREIDIMENSIONALEN GEGENSTANDES MIT EINER DRUCKERZEUGUNGSEINHEIT**
DEVICE FOR PRODUCING A THREE-DIMENSIONAL OBJECT USING A PRESSURE GENERATING UNIT
DISPOSITIF DE PRODUCTION D'UN OBJET TRIDIMENSIONNEL À L'AIDE D'UNE UNITÉ DE GÉNÉRATION DE PRESSION

(30) Priorität: 25.11.2011 DE 102011119337
(43) Veröffentlichungstag der Anmeldung: 01.10.2014
(73) Patentinhaber: Arburg GmbH + Co KG, 72290 Lossburg (DE)
(72) Erfinder: KRAIBÜHLER, Herbert, 72290 Lossburg (DE); DUFFNER, Eberhard, 72181 Starzach (DE)
(74) Vertreter: Reinhardt, Harry
(86) Internationale Anmeldenummer: PCT/EP2012/004854
(87) Internationale Veröffentlichungsnummer: WO 2013/075837

(56) Entgegenhaltungen:
- EP-A1- 2 266 782
- DE-A1- 3 229 223
- DE-A1- 4 344 335
- US-A1- 2006 093 694

## Beschreibung

### Gebiet der Erfindung

Die Erfindung betrifft eine Vorrichtung zur Herstellung eines dreidimensionalen Gegenstandes mit einer Druckerzeugungseinheit nach dem Oberbegriff des Anspruches 1.

### Stand der Technik

Aus der EP 2 266 782 A1 ist eine Vorrichtung zur Herstellung eines dreidimensionalen Gegenstands aus verfestigbarem Material bekannt, in der eine in der Spritzgießtechnik bekannte Plastifiziereinheit an einen unter Druck setzbaren Materialspeicher für die Erzeugung einer fluiden Phase des Materials als Druckerzeugungseinheit und Aufbereitungseinheit angekoppelt ist. Der Materialspeicher ist Bestandteil einer Austragseinheit zum Austragen aufeinander folgender Tropfen zum werkzeuglosen Aufbau des dreidimensionalen Gegenstandes auf einem Objektträger. Die Druckerzeugungseinheit weist einen einen Rotor aufweisenden Rotationsmotor und einen eine Spindel antreibenden Axialbewegungsmotor zur Bewegung eines Fördermittels auf.

Aus der DE 103 18 958 B3 ist es für einen Antrieb einer Spritzgießeinheit an einer Spritzgießmaschine bekannt, den Axialbewegungsmotor unmittelbar an die Förderschnecke anzuschließen und den die Rotation der Förderschnecke bewirkenden Dosiermotor aus Sicht der Plastifiziereinheit hinter dem Axialbewegungsmotor. Die Verbindung zwischen einer den Axialbewegungsmotor durchgreifenden Spindel und dem Rotor des Dosiermotors erfolgt drehfest, aber axial beweglich über Vielzahnverbindungen. (so auch WO 2007/134961 A1, US 7,270,532 B2 ) Die Lage des Axialbewegungsmotors zum Dosiermotor ändert sich beim Betrieb der Spritzgießeinheit nicht.DE 43 44 335 A1 offenbart eine Vorrichtung gemäß dem Oberbegriff des Anspruchs 1. Aus der DE 32 29 223 A1 ist es bei einer Antriebsvorrichtung für eine Spritzgießmaschine bekannt, die Spindel des hydraulischen Axialbewegungsmotors mit dem Rotor des Rotationsmotors einenends axial fest und anderenends mit dem Fördermittel lösbar zu verbinden-Ergänzend weist die US 2006/0093694 A1 bei einem mit der DE 103 18 958 B3 vergleichbaren Aufbau ein Blockiermittel 29 nach Art einer Kupplung auf, die beim Auftreten einer bestimmten Kraft nur noch einen unidirektionalen Betrieb des Axialbewegungsmotors gestattet.

Für die Erzeugung der Tropfen stehen 50 bis 100 MPa (500 bis 1000 bar) an der Austrittsöffnung der Austragseinheit an. Dies liegt unter anderem an dem sogenannten laminaren Quellfluss, den das Material in der fluiden Phase aufweist. In den Quellfluss geht unter anderem die Anlagerung der Schmelze an der Wandung ein. Dies wird am deutlichsten bei einem Blick in die Erkenntnisse in der Spritzgießtechnik. Bei der Formfüllung eines einfachen, rechteckigen Kanals wird die die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht jedoch eine besondere Strömungssituation, der "Quellfluss", da die Stromlinien in diesem Bereich wie eine Quelle erscheinen, wenn man sie in Bezug auf ein mitbewegtes Koordinatensystem betrachtet.

Der laminare Quellfluss ist für die Erzeugung von auf den herzustellenden Gegenstand 'ausgerichteten' Tropfen auf Grund seiner laminaren Ausbildung einerseits von Vorteil, andererseits bestehen vor allem bei der Ausbildung kleiner Tropfen genau hier die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschtem kleinen Volumen, vorzugsweise im Bereich kleiner gleich 1 mm³ ausbilden lassen, andererseits ist eine entsprechend hohe Viskosität des Materials gerade für die Ausbildung einer geeigneten Tropfenform eines Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 [Pa s], wobei vorzugsweise das verfestigbare Material ein in der Spritzgießtechnik üblicher Kunststoff oder ein Harz ist. Dies macht die Verarbeitung aus einem unter Druck setzbaren Materialspeicher und damit auch die Verwendung einer gesonderten Druckerzeugungseinheit erforderlich, da Drücke von mehr als 50 bis 100 MPa (500 bis 1000 bar) ohne weiteres erforderlich sind, insbesondere wenn zur Erzielung kleiner Tropfenvolumen kleine Austragsöffnungen eingesetzt werden.

Vorzugsweise liegt das gewünschte Volumen des Tropfens insbesondere im Bereich von 0,01 bis 1 mm³. Der Durchmesser der Austrittsöffnung beträgt vorzugsweise etwa 0,1 mm. Bei einer durchaus üblichen Einspritzgeschwindigkeit von 100 [cm/s], die durch einen sogenannten Punktanguss mit 0,1 [mm] Durchmesser die Masse fördert, ergibt sich mit Volumenstrom durch Fläche ein Wert von 10.000 [m/s]. Dies führt für die fluide Phase zu einem laminaren Quellfluss mit Fließgeschwindigkeiten bis zu 10.000 m/s.

Vergleichbare Verfahren, die weitläufig unter dem Begriff Prototyping und Rapid Manufacturing bekannt sind und zur Herstellung von Musterteilen mit der Anforderung einer sehr kurzzeitigen Bereitstellung vorgesehen sind, haben diese Problematik nicht. Die Herstellung solcher Teile beruht werkzeuglos, d.h. ohne Formwerkzeuge, und zwar in den meisten Fällen auch auf der Erzeugung der Geometrie aus 3D-Daten, jedoch werden diese Geometrien durch entsprechende Mittel wie Aufschmelzen von Pulverschichten durch Wärmeintrag, z.B. mittels Laser, generative Systeme wie Druckverfahren in unterschiedlicher verbindender Form der Pulverteile oder auch im sogenannten Schmelzstrangverfahren hergestellt. Die Präzision dieser Verfahren wird durch den Druck im System entweder gar nicht oder im Schmelzstrangverfahren in geringem Maße beeinflusst, allerdings findet dort kein diskontinuierliches Herstellen des dreidimensionalen Gegenstandes statt.

### Offenbarung der Erfindung

Ausgehend von diesem Stand der Technik liegt der vorliegenden Erfindung die Aufgabe zugrunde, eine Vorrichtung für die Bereitstellung hoher Kräfte bei geringen Geschwindigkeiten bereitzustellen.

Diese Aufgabe wird durch eine Vorrichtung mit den Merkmalen des Anspruches 1 gelöst.

Die Vorrichtung weist dazu die Aufbereitungseinheit zur Bereitstellung und ggf. Aufbereitung des verfestigbaren Materials und die Druckerzeugungseinheit auf, wobei Tropfen über eine Austragseinheit ausgetragen werden. Die Druckerzeugungseinheit umfasst einen Rotationsmotor und einen Axialbewegungsmotor zur Bewegung eines Fördermittels, wobei aus Sicht der Austragseinheit der Rotationsmotor hinter dem Axialbewegungsmotor angeordnet ist, der die Drücke aufbringt und insofern näher an der Plastifiziereinheit und dem Materialspeicher angeordnet ist als der Rotationsmotor. Der Axialbewegungsmotor kann damit gut gelagert größer ausgebildet werden und gleichzeitig den Rotationsmotor quasi im Rücken tragen, der durch die im Verhältnis zur Spritzgießtechnik geringen Geschwindigkeiten weniger belastet ist. Die Druckerzeugungseinheit kann damit einerseits konstant den Druck durch Vorwärtsbewegung eines vorzugsweise als Förderschnecke ausgebildeten Fördermittels erzeugen und andererseits den Kunststoff durch Rotation der Förderschnecke zur Schmelze aufbereiten. Der Rotor des Dosiermotors ist mit der Spindel des Einspritzmotors fest verbunden, die wiederum lösbar mit der Förderschnecke verbunden ist. Diese Spindel steht innerhalb des Axialbewegungsmotors mit dem Rotor des Axialbewegungsmotors in Verbindung. Um die erforderlichen zyklischen Bewegungen der Förderschnecke und die Rotationsbewegung des Dosiermotors miteinander zu verkoppeln, ist der relativ zum Axialbewegungsmotor axial beweglich gelagerte Dosiermotor in einer Drehrichtung durch einen Freilauf blockierbar. Es ergibt sich ein kompaktes System, so dass die Einflüsse der hohen Drücke auch im System selbst gering sind. Dabei können in der Spritzgießtechnik übliche und damit günstige Materialien verwendet werden, da keine besonderen Prototyping-Materialien erforderlich sind.

Vorzugsweise besteht die Druckerzeugungseinheit aus einem Axialbewegungsmotor, der als Hohlwellenmotor mit innenliegender Gewindespindel ausgebildet ist, durch den die Förderschnecke axial bewegt wird. Die Rotation der Förderschnecke erfolgt über einen gesonderten Dosiermotor, der im Zusammenwirken mit dem Axialbewegungsmotor und der Regelung des Staudrucks das plastifizierte Material zur Verfügung stellt. Die Schneckenbewegung erfolgt ausschließlich innerhalb des Systems, was die präzise Tropfenaustragung und damit eine hohe reproduzierbare Bauteilgenauigkeit unterstützt.

Weitere Vorteile ergeben sich aus den Unteransprüchen und der nachfolgenden Beschreibung eines Ausführungsbeispiels.

### Kurzbeschreibung der Figuren

Im Folgenden wird die Erfindung anhand eines Ausführungsbeispiels näher erläutert. Es zeigen:
- Fig. 1: eine Vorrichtung zur Herstellung eines dreidimensionalen Gegenstandes in dreidimensionaler Ansicht,
- Fig. 2: einen Längsschnitt durch die Druckerzeugungseinheit,
- Fig. 3: einen Längsschnitt durch Druckerzeugungseinheit und Plastifiziereinheit.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Vorrichtung zur Herstellung eines dreidimensionalen Gegenstandes 50 aus verfestigbarem Material, das entweder im Ausgangszustand in einer fluiden Phase vorliegt oder verflüssigt werden kann. Die Herstellung des Gegenstandes erfolgt vorzugsweise durch sequenzielles Austragen von Tropfen 70. Dazu können z.B. einzelne Tropfen 70 sequenziell aus einer Austrittsöffnung 12b einer Austragseinheit 12 ausgetragen werden, so dass sich Schicht für Schicht der Gegenstand 50 auf einem in den Koordinatenrichtungen des Raumes beweglichen Objektträgers 13 ergibt. Der Objektträger 13 ist an einer Lagerung 40 relativ zur Austrittsöffnung 12b der Austragseinheit beweglich geführt.

Das verfestigbare Material ist ein plastifiziertes Material, wie z.B. Silikon oder ein plastifizierbares Material, wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recyclebares Material sein. Beliebige andere Materialien können verwendet werden, sofern diese Materialien durch die Vorrichtung plastifizierbar und vor allem durch die wenigstens eine Austragseinheit 12 austragbar sind. Mit der Vorrichtung können vor allem aber auch Materialien verarbeitet werden, wie sie üblicherweise in der Spritzgießtechnik in großen Mengen eingesetzt werden, was zur günstigen Herstellung der damit herzustellenden Gegenstände beiträgt.

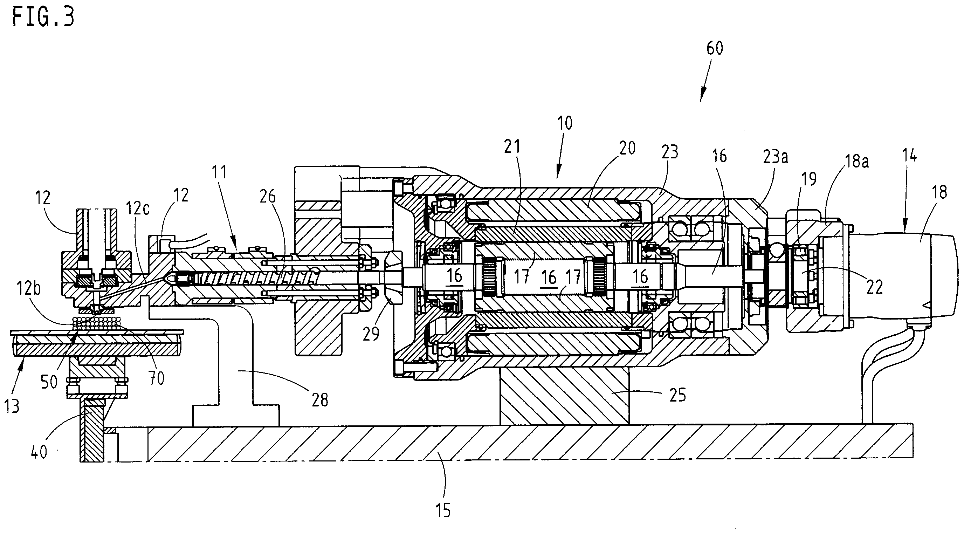

Die Vorrichtung weist wenigstens eine Aufbereitungseinheit zur Aufbereitung des verfestigbaren Materials in die fluide Phase und zu dessen Bereitstellung - insbesondere wenn das Material bereits flüssig vorliegt, aber eventuell noch in diesem Zustand zu halten ist - auf, die im Ausführungsbeispiel durch eine in der Spritzgießtechnik bekannte Plastifiziereinheit 11 gebildet ist. Diese Plastifiziereinheit ist im Ausführungsbeispiel unmittelbar an einen unter Druck setzbaren Materialspeicher 12c in der Austragseinheit 12 gekoppelt, der gemäß Fig. 3 auch nur als Kanal ausgebildet sein kann. Bedarfsweise ist auch eine mittelbare Kopplung möglich, sofern dafür Sorge getragen wird, dass die hohen Drücke in geeigneter Weise beherrscht werden. Die Austragseinheit 12 dient zum Austragen des verfestigbaren Materials durch eine vorzugsweise taktbare Austrittsöffnung 12b in Richtung auf den herzustellenden dreidimensionalen Gegenstand 50 bzw. den zugehörigen Objektträger 13.

Wenigstens eine Druckerzeugungseinheit 60 erzeugt den Druck auf die fluide Phase im Materialspeicher 12c, der insbesondere bei der tropfenweisen Ausbringung des Materials erforderlich ist, damit sich die entsprechenden Tropfen, besser gesagt Tröpfchen ausbilden können. Grundsätzlich eignet sich die Vorrichtung aber zur Ausbringung von Material bei hohen Kräften mit geringer Geschwindigkeit. Austragseinheit 12 und Druckerzeugungseinheit 60 sind vorzugsweise über die Plastifiziereinheit 11 miteinander verbunden. Sie bilden ein System, in dem bzw. innerhalb dessen der Druck auf die fluide Phase aufgebracht wird. Austragseinheit 12 und Lagerung 40 sind feststehend miteinander verbunden. Die Druckerzeugungseinheit 60 ist an der Austragseinheit 12 angeschlossen und gegenüber dieser Verbindung beweglich gelagert. Damit wird die dem Grunde nach größere Einheit, nämlich die Druckerzeugungseinheit 60 beweglich gegenüber der kleineren, entsprechend starr ausgebildeten Einheit aus Austragseinheit 12 und Lagerung 40 für den Objektträger 13 gelagert. So wird trotz hoher Drücke und ggf. hoher Temperaturen eine Präzision im Bereich der Austragung der Tropfen 70 gewährleistet.

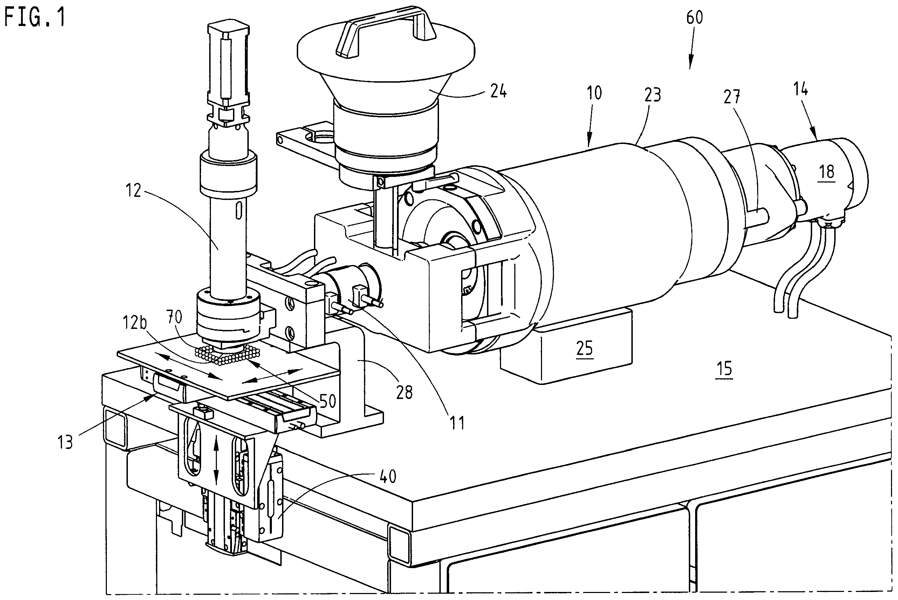

Vorzugsweise sind Austragseinheit 12 und Lagerung 40 stationär auf einem Maschinentisch 15 angeordnet, der vorzugsweise steif ausgebildet ist, um auch an dieser Stelle die Bewegungen so gering wie möglich zu halten. Gemäß Fig. 1 und 3 ist der Axialbewegungsmotor 10 der Druckerzeugungseinheit über die Abstützung 25 auf dem Maschinentisch 15 vorzugsweise beweglich, nämlich entlang des Maschinentisches axial beweglich abgestützt, während die Austragseinheit 12 über die Abstützung 28 auf dem Maschinentisch 15 abgestützt ist. Am Maschinentisch 15 ist dann wiederum die Lagerung 40 für den Koordinatentisch des Objektträgers 13 feststehend befestigt, so dass sich über den Maschinentisch 15 eine starre Verbindung zwischen Lagerung 40 und Austragseinheit 12 ergibt.

Die Druckerzeugungseinheit 60 weist einen Rotationsmotor, den elektromechanischen Dosiermotor 14, und einen Axialbewegungsmotor 10 zur Bewegung eines Fördermittels auf, wobei das Fördermittel vorzugsweise eine in der Plastifiziereinheit 11 aufgenommene Förderschnecke 26 ist. Gemäß Fig. 3 ist aus Sicht der Austragseinheit 12 der Dosiermotor 14 hinter dem Axialbewegungsmotor 10 angeordnet. Diese Anordnung wurde gewählt, da durch den Axialbewegungsmotor hohe Kräfte im Bereich von regelmäßig zwischen 50 und 100 MPa aufgebracht werden müssen. Durch die gewählte Anordnung können diese Kräfte auf kürzestem Weg auf die Austragseinheit 12 bzw. den in ihr angeordneten Materialspeicher 12c aufgebracht werden. Die Druckerzeugungseinheit 60 bewirkt einerseits eine konstante Druckerzeugung durch Vorwärtsbewegung des Fördermittels bzw. der Förderschnecke 26, andererseits wird im Zusammenwirken zwischen Förderschnecke 26 und Plastifiziereinheit 11 durch Rotation der Förderschnecke in der Plastifiziereinheit der Kunststoff bedarfsweise zur Schmelze aufbereitet.

Die Axialbewegung der Förderschnecke 26 wird durch den Axialbewegungsmotor erzeugt, der einen Stator 20 und einen hohlen Rotor 21 zum Antrieb einer den Rotor durchgreifenden Spindel 16 aufweist. Die Spindel 16 des Spindelantriebes steht mit einer Mutter in Wirkverbindung. Die Rotation der Förderschnecke 26 erfolgt durch einen gesonderten Antriebsmotor 18 des Dosiermotors 14, der gleichzeitig mit dem Axialbewegungsmotor und der Regelung des Staudrucks zur Herstellung des Gegenstandes eingesetzt wird. Die Achsen des Antriebsmotors 18 des Dosiermotors 14 und des Axialbewegungsmotors 10 fluchten miteinander.

Die Spindel 16 des Axialbewegungsmotors 10 ist mit einem Rotor 22 des Antriebsmotors 18 fest und mit dem Fördermittel bzw. der Förderschnecke 26 lösbar verbunden. Um den Betrieb der beiden Motoren unabhängig voneinander zu gewährleisten ist insofern der Dosiermotor 14 durch einen in einem Gehäuse 18a des Antriebsmotors 18 gelagerten Freilauf 19 in einer Drehrichtung blockierbar. Das Gehäuse 18a des Antriebsmotors 18 ist zum Drehmomentgegenhalt des Freilaufs über eine Drehmomentstütze 27 am Gehäuse 23 bzw. dem Gehäusedeckel 23a des Axialbewegungsmotors 10 gelagert.

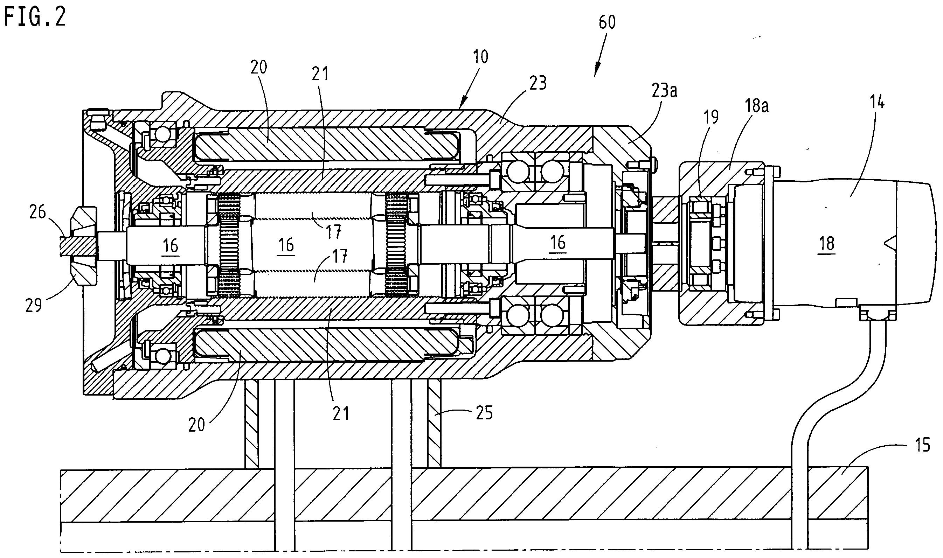

Der Axialbewegungsmotor 10 ist durch einen Hohlwellenmotor gebildet, der von der Spindel 16 durchgriffen ist. Die Mutter des Spindelantriebs des Axialbewegungsmotors 10 ist im Rotor 21 des Axialbewegungsmotors gelagert oder wie im Ausführungsbespiel gemäß Fig. 2 durch den Rotor 21 gebildet. Im Ausführungsbeispiel stehen zudem der Rotor 21 und die Spindel 16 über Planeten 17 miteinander in Wirkverbindung.

Gemäß Fig. 3 ist die Förderschnecke 26 am vorderen Ende der Spindel 16, d.h. in Fig. 3 auf der linken Seite des Axialbewegungsmotors über eine Schneckenkupplung 29 lösbar befestigt.

Bei der Druckerzeugung und der Bereitstellung des plastifizierbaren Materials arbeitet die Vorrichtung wie folgt:
Im Ausführungsbeispiel wird die Axialbewegung der Förderschnecke 26 gemäß Fig. 3 durch die Spindel 16 des Axialbewegungsmotors 10 mit rotativ angetriebenen Rotor 21 erzeugt, der zugleich die Mutter des Spindelantriebs bildet. Die Übertragung vom Rotor 21 auf die Spindel 16 erfolgt unter Zwischenschaltung der Planeten 17. Die Spindel kann eine Axialkraft nur erzeugen, wenn sie entsprechend ihrer Spindelübersetzung eine Drehmomentgegenkraft erfährt. Diese Drehmomentgegenkraft wird in der Hauptkraftrichtung, also bei Bewegung der Förderschnecke 26 in Fig. 3 nach links durch den Dosiermotor 14 gebildet, der über eine Drehmomentstütze 27 am Gehäuse 23 für den Axialbewegungsmotor 10 abgestützt ist. Die Drehmomentstütze 27 bildet Führungen aus, entlang derer der Dosiermotor 14 bei Bewegung des Fördermittels axial beweglich gelagert ist. Für die Schneckenrückwärtsbewegung wird die Drehmomentgegenkraft durch entsprechend geregeltes aktives Bestromen zur Verfügung gestellt. Durch die feste Verbindung der Spindel 16 des Axialbewegungsmotors 10 mit dem Rotor 22 des Antriebsmotors 18 führt die Drehbewegung des Dosiermotors grundsätzlich auch zu einer Drehbewegung der Spindel 16 und umgekehrt. Die Spindel 16 kann die Drehung in eine Linearbewegung umsetzen, wenn entsprechend ihrer Spindelsteigung einer der gewünschten Vorschubkraft entsprechende Drehmomentabstützung vorgesehen ist. Für diese Drehmomentabstützung ist für den Aufbau des Drucks, d.h. für die Bewegung der Förderschnecke 26 in Fig. 3 nach links ein Freilauf 19 in den Antriebsmotor 18 des Dosiermotors 14 integriert, während für die Rückzugsrichtung der Förderschnecke 26 aktiv mit dem Dosiermotor 14 gearbeitet wird. Um die Bewegung des Axialbewegungsmotors vom Dosiermotor 14 zu entkoppeln, ist der Freilauf vorgesehen, der den Dosiermotor 14 in einer Drehrichtung blockiert bzw. blockieren kann, also ein unidirektionales Drehverhinderungsmittel. Der Freilauf 19 ist am Gehäuse 18a des Antriebsmotors 18 des Dosiermotors 14 gelagert. Diese Lagerung ist ihrerseits wiederum über die Drehmomentstütze 27 am Gehäuse 23 bzw. dem Gehäusedeckel 23a des Axialbewegungsmotors 10 gelagert.

### Bezugszeichenliste

- 10: Axialbewegungsmotor
- 11: Plastifiziereinheit
- 12: Austragseinheit
- 12b: Austrittsöffnung
- 12c: Materialspeicher
- 13: Objektträger
- 14: Dosiermotor
- 15: Maschinentisch
- 16: Spindel
- 17: Planeten
- 18: Antriebsmotor
- 18a: Gehäuse
- 19: Freilauf
- 20: Stator von 10
- 21: Rotor von 10
- 22: Rotor von 18
- 23: Gehäuse von 10
- 23a: Gehäusedeckel
- 24: Materialbehälter
- 25: Abstützung für 10
- 26: Förderschnecke
- 27: Drehmomentstütze
- 28: Abstützung für 12
- 29: Schneckenkupplung
- 40: Lagerung
- 50: Gegenstand
- 60: Druckerzeugungseinheit
- 70: Tropfen

## Patentansprüche

1. Vorrichtung zur Herstellung eines dreidimensionalen Gegenstandes (50) aus verfestigbarem Material, das entweder im Ausgangszustand fluid vorliegt oder verflüssigt werden kann, mit
- wenigstens einer Aufbereitungseinheit zur Bereitstellung und ggf. Aufbereitung des verfestigbaren Materials in die fluide Phase,
- mindestens einer Austragseinheit (12) zum Austragen des verfestigbaren Materials durch eine Austrittsöffnung (12b),
- wenigstens einer Druckerzeugungseinheit (60) zur Erzeugung eines Drucks auf die fluide Phase, wobei die Druckerzeugungseinheit einen einen Rotor (22) aufweisenden Rotationsmotor und einen eine Spindel (16) antreibenden Axialbewegungsmotor (10) zur Bewegung eines Fördermittels umfasst,
- wobei aus Sicht der Austragseinheit (12) der Rotationsmotor hinter dem Axialbewegungsmotor (10) angeordnet ist,
- wobei die Spindel den Axialbewegungsmotor (10) durchgreift und mit dem Rotor des Rotationsmotors drehfest verbunden ist,
- wobei die Achsen des Rotationsmotors und des Axialbewegungsmotors (10) miteinander fluchten, **dadurch gekennzeichnet, dass**
- die Spindel (16) des Axialbewegungsmotors (10) mit dem Rotor (22) des Rotationsmotors einenends auch axial fest verbunden ist und anderenends mit dem Fördermittel lösbar verbunden ist,
- der Rotationsmotor durch einen in einem Gehäuse (18a) des Antriebsmotors (18) des Rotationsmotors gelagerten Freilauf (19) in einer Drehrichtung blockierbar ist und der Rotationsmotor relativ zum Axialbewegungsmotor (10) axial beweglich gelagert ist.

2. Vorrichtung nach Anspruch 1, **dadurch gekennzeichnet, dass** der Rotationsmotor ein elektromechanischer Dosiermotor (14) zum Drehen des als Förderschnecke (26) ausgebildeten Fördermittels ist und dass der elektromechanische Axialbewegungsmotor (10) zur Axialbewegung der Förderschnecke (26) einen Stator (20) und einen hohlen Rotor (21) zum Antrieb der den Rotor (21) durchgreifenden Spindel (16) eines Spindelantriebs und einer damit zusammenwirkenden Mutter aufweist.

3. Vorrichtung nach einem der Ansprüche 1 oder 2, **dadurch gekennzeichnet, dass** sie wenigstens einen Materialspeicher (12c) für die fluide Phase aufweist, der mit der Druckerzeugungseinheit (60) zur Erzeugung des Drucks auf die fluide Phase im Materialspeicher (12c) verbunden ist.

4. Vorrichtung nach einem der vorhergehenden Ansprüche, **dadurch gekennzeichnet, dass** die Austragseinheit (12) zum sequentiellen Austragen des verfestigbaren Materials in Form von Tropfen (70) eine Austrittsöffnung (12b) in Richtung auf den herzustellenden dreidimensionalen Gegenstand (50) aufweist,

5. Vorrichtung nach einem der vorhergehenden Ansprüche, **dadurch gekennzeichnet, dass** die Aufbereitungseinheit eine in der Spritzgießtechnik bekannte Plastifiziereinheit (11) zur Aufbereitung des verfestigbaren Materials als plastifiziertes oder plastifizierbares Material ist, die unmittelbar an den unter Druck setzbaren Materialspeicher (12c) angekoppelt ist.

6. Vorrichtung nach einem der vorhergehenden Ansprüche, **dadurch gekennzeichnet, dass** das Gehäuse (18a) des Antriebsmotors (18) des als Dosiermotor (14) ausgebildeten Rotationsmotors zum Drehmomentgegenhalt des Freilaufs (19) am Gehäuse (23) des Axialbewegungsmotors (10) gelagert ist.

7. Vorrichtung nach einem der vorhergehenden Ansprüche, **dadurch gekennzeichnet, dass** der Rotationsmotor an eine Drehmomentstütze (27) bildenden Führungen gelagert ist, die am Gehäuse (23) des Axialbewegungsmotors (10) befestigt sind.

8. Vorrichtung nach einem der vorhergehenden Ansprüche, **dadurch gekennzeichnet, dass** der Axialbewegungsmotor (10) durch einen Hohlwellenmotor gebildet ist, der von der Spindel (16) durchgriffen ist.

9. Vorrichtung nach einem der Ansprüche 2 bis 8, **dadurch gekennzeichnet, dass** die Mutter des Spindelantriebs des Axialbewegungsmotors (10) im Rotor (21) des Axialbewegungsmotors gelagert oder durch diesen Rotor (21) gebildet ist.

10. Vorrichtung nach einem der vorhergehenden Ansprüche, **dadurch gekennzeichnet, dass** im Axialbewegungsmotor (10) ein Planetenantrieb aufgenommen ist.

## Claims

1. A device for the production of a three-dimensional object (50) from solidifiable material which is either present in fluid form in the starting state or can be liquefied, comprising
- at least one preparation unit for the provision and if necessary preparation of the solidifiable material into the fluid phase,
- at least one discharge unit (12) for discharging the solidifiable material through an outlet opening (12b),
- at least one pressure generating unit (60) for generating a pressure on the fluid phase, wherein the pressure generating unit comprises a rotation motor, incorporating a rotor (22) and an axial movement motor (10) driving a spindle (16) for moving a conveying means,
- wherein the rotation motor is arranged behind the axial movement motor (10) as seen from the discharge unit (12),
- wherein the spindle passes through the axial movement motor (10) and is connected to the rotor of the rotation motor non-rotatably,
- wherein the axes of the rotation motor and the axial movement motor (10) are mutually aligned,
**characterized in that**
- the spindle (16) of the axial movement motor (10) is also rigidly connected axially to the rotor (22) of the rotation motor (14) at one end and is connected in releasable manner to the conveying means at the other end,
- the rotation motor (14) is blockable in one direction of rotation by a free-wheel device (19) mounted in a housing (18a) of the drive motor (18) and the rotation motor is mounted relative to the axial movement motor (10) in axially moveable manner.

2. A device in accordance with Claim 1, **characterized in that** the rotation motor is an electromechanical dispensing motor (14) for the rotation of the conveying means which is in the form of a feed screw (26), and **in that** the electromechanical axial movement motor (10) for the axial movement of the feed screw (26) comprises a stator (20) and a hollow rotor (21) for driving the spindle (16) of a spindle drive and a nut cooperating therewith which spindle passes through the rotor (21).

3. A device in accordance with either of the Claims 1 or 2, **characterized in that** it comprises at least one material storage device (12c) for the fluid phase which is connected to the pressure generating unit (60) for generating the pressure on the fluid phase in the material storage device (12c).

4. A device in accordance with any of the preceding Claims, **characterized in that** the discharge unit (12) for the sequential discharge of the solidifiable material in the form of drops (70) comprises an outlet opening (12b) in direction of the three-dimensional object (50) to be manufactured.

5. A device in accordance with any of the preceding Claims, **characterized in that** the preparation unit is a plasticizing unit (11) known from the field of injection moulding for preparing the solidifiable material into the form of plastified or plastifiable material, which plasticizing unit is directly coupled to the material storage device (12c) that is subjectable to pressure.

6. A device in accordance with any of the preceding Claims, **characterized in that** the housing (18a) of a drive motor (18) of the rotation motor in the form of a dispensing motor (14) is mounted on the housing (23) of the axial movement motor (10) for the purposes of countering a torque of the free-wheel device (19).

7. A device in accordance with any of the preceding Claims, **characterized in that** the rotation motor is mounted on guides which form a torque support (27) and are fixed to the housing (23) of the axial movement motor (10).

8. A device in accordance with any of the preceding Claims, **characterized in that** the axial movement motor (10) is formed by a hollow shaft motor through which the spindle (16) passes.

9. A device in accordance with any of the Claims 2 to 8, **characterized in that** the nut of the spindle drive of the axial movement motor (10) is mounted in the rotor (21) of the axial movement motor or is formed by this rotor (21).

10. A device in accordance with any of the preceding Claims, **characterized in that** a planetary gear drive is accommodated in the axial movement motor (10).

## Revendications

1. Dispositif pour la fabrication d'un objet tridimensionnel (50) à partir d'un matériau durcissable, qui se présente sous forme fluide à l'état initial ou qui peut être fluidifié, comportant
- au moins une unité de préparation pour la préparation et éventuellement la mise du matériau durcissable sous forme de phase fluide,
- au moins une unité de distribution (12) pour la distribution du matériau durcissable à travers un orifice de distribution (12b),
- au moins une unité de production de pression (60) pour la production de pression sur la phase fluide, l'unité de production de pression comprenant un moteur d'entraînement en rotation comportant un rotor (22) et un moteur de déplacement axial (10) entraînant un arbre (16) pour le déplacement d'un moyen d'avancement,
- dans lequel, en regardant depuis l'unité de distribution (12), le moteur d'entraînement en rotation est disposé derrière le moteur de déplacement axial (10),
- l'arbre pénétrant dans le moteur de déplacement axial (10) et étant relié avec le rotor du moteur d'entraînement en rotation d'une manière résistant à la rotation et
- les axes du moteur d'entraînement en rotation et du moteur de déplacement axial (10) étant alignés,
**caractérisé en ce que**
- l'arbre (16) du moteur de déplacement axial (10) étant relié fermement également axialement au rotor (22) du moteur d'entraînement en rotation à une extrémité et étant relié de manière amovible au moyen d'avancement à une autre extrémité,
- le moteur d'entraînement en rotation pouvant être bloqué dans un sens de rotation par un pignon fou (19) situé dans un logement (18a) du moteur d'entraînement (18) du moteur d'entraînement en rotation et le moteur d'entraînement en rotation étant disposé de manière déplaçable axialement par rapport au moteur de déplacement axial (10).

2. Dispositif selon la revendication 1, **caractérisé en ce que** le moteur d'entraînement en rotation est un moteur de dosage électromécanique (14) pour l'entraînement en rotation du moyen d'avancement réalisé sous forme de vis sans fin (26) et **en ce que** le moteur de déplacement axial électromécanique (10) comporte pour le déplacement axial de la vis sans fin (26) un stator (20) et un rotor (21) pour l'entraînement de l'arbre (16) pénétrant dans le rotor (21), d'un entraînement à arbre, et d'un écrou coopérant avec lui.

3. Dispositif selon l'une des revendications 1 ou 2, **caractérisé en ce qu'**il présente au moins un réservoir de matériau (12c) pour la phase fluide, lequel est relié avec l'unité de production de pression (60) pour la production d'une pression sur la phase fluide dans le réservoir de matériau (12c).

4. Dispositif selon l'une des revendications précédentes, **caractérisé en ce que** l'unité de distribution (12) présente un orifice de sortie (12b) pour la distribution séquentielle du matériau durcissable sous forme de gouttes (70) en direction de l'objet tridimensionnel (50) à fabriquer.

5. Dispositif selon l'une des revendications précédentes, **caractérisé en ce que** l'unité de préparation est une unité de plastification (11) connue dans la technique du moulage par injection pour la préparation du matériau durcissable sous forme de matériau plastifiée ou plastifiable, unité de plastification qui est directement couplée au réservoir de matériau (12c) pouvant être mis sous pression.

6. Dispositif selon l'une des revendications précédentes, **caractérisé en ce que** le logement (18a) du moteur d'entraînement du moteur d'entraînement en rotation réalisé sous forme moteur de dosage (14) est disposé, pour s'opposer au moment de rotation du pignon fou, au niveau du logement (23) du moteur de déplacement axial (10).

7. Dispositif selon l'une des revendications précédentes, **caractérisé en ce que** le moteur d'entraînement en rotation est disposé au niveau de guidages formant un support de moment de rotation (27), lesquels sont fixés au logement (23) du moteur de déplacement axial (10).

8. Dispositif selon l'une des revendications précédentes, **caractérisé en ce que** le moteur de déplacement axial (10) est formé d'un moteur à axe creux, lequel pénètre dans l'arbre (16).

9. Dispositif selon l'une des revendications 2 à 8, **caractérisé en ce que** l'écrou de l'entraînement de l'arbre du moteur de déplacement axial (10) est disposé dans le rotor (21) du moteur de déplacement axial et est formé par ce rotor (21).

10. Dispositif selon l'une des revendications précédentes, **caractérisé en ce qu'**un entraînement planétaire est logé dans le moteur à déplacement axial (10).
